# EUROPEAN PATENT APPLICATION

(11) **EP 4 807 328 A1**
(43) Date of publication of application: **16.09.2026**
(21) Application number: 24888745.7
(22) Date of filing: 06.11.2024
(51) Int. Cl.: G01F 1/00, G01F 1/66, G01M 3/28

(54) **WATER METER**

(30) Priority: 09.11.2023 JP 2023191777
(71) Applicant: Panasonic Intellectual Property Management Co., Ltd., Kadoma-shi, Osaka 571-0057 (JP)
(72) Inventor: FUJII, Yuji, Osaka 571-0057 (JP); NAKABAYASHI, Yuuji, Osaka 571-0057 (JP); KOREKUNI, Jin, Osaka 571-0057 (JP); MATSUDA, Masataka, Osaka 571-0057 (JP); TAKAKURA, Yuya, Osaka 571-0057 (JP)
(74) Representative: SSM Sandmair
(86) International application number: PCT/JP2024/039480
(87) International publication number: WO 2025/100452

(57) **Abstract**

A water meter includes: a measurement passage (10) through which water serving as a fluid to be measured flows; a flow rate measurer (21) that measures a flow rate of the water flowing through the measurement passage (10), the flow rate being an instantaneous flow rate; a flow rate pattern storage (24) that stores a first flow rate pattern indicating temporal changes in measured values obtained by the flow rate measurer (21) when the flow rate is zero; a water leakage determiner (25) that determines whether or not there is water leakage based on a second flow rate pattern indicating temporal changes in measured values obtained by the flow rate measurer (21) and the first flow rate pattern stored in the flow rate pattern storage (24); a display (26) that displays predetermined information in a case where the water leakage determiner (25) has determined that there is water leakage; and a meter communicator (27) that notifies a center apparatus (80) that manages water leakage of an occurrence of water leakage.

## Description

### Technical Field

The present disclosure relates to a water meter.

### Background Art

Conventionally, water used in each premises is supplied from a water supply station, conveyed through a main pipe extending from the water supply station, then divided at a branch point into branch pipes for respective areas, and supplied to each premises through a service pipe branched from one of the branch pipes. For each premises, in order to measure the amount of water used in the premises, the service pipe leading to the premises is equipped with a water meter. Such water meters are predominantly of the impeller type, for example, as disclosed in Patent Literature 1. Meanwhile, in recent years, ultrasonic water meters have also been considered for introduction, as disclosed in Patent Literature 2.

### Citation List

### Patent Literature

PTL 1: Japanese Laid-Open Patent Application Publication No. 2005-837771
PTL 2: Japanese Laid-Open Patent Application Publication No. 2003-139590

### Summary of Invention

### Technical Problem

Incidentally, in the case of an impeller-type water meter such as one disclosed in Patent Literature 1, a permanent magnet mounted on the impeller rotates together with the impeller due to a flow of water, thereby generating a rotating magnetic field. The flow rate of the water is measured by detecting the rotating magnetic field with a magnetic detection element. Due to such a mechanism, it is impossible to detect minute water leakage.

Although Patent Literature 2 discloses an ultrasonic water meter, Patent Literature 2 does not explicitly disclose any configuration or method for detecting minute water leakage. In particular, aging of pipes or deterioration of packings at pipe connections may cause extremely minute water leakage. Even when such minute water leakage occurs in piping downstream of the water meter, its detection is desired.

Accordingly, an object of the present disclosure is to provide a water meter capable of achieving accurate water leakage detection.

### Solution to Problem

A water meter according to the present disclosure includes: a measurement passage through which water serving as a fluid to be measured flows; a flow rate measurer that measures a flow rate of the water flowing through the measurement passage, the flow rate being an instantaneous flow rate; a flow rate pattern storage that stores a first flow rate pattern indicating temporal changes in measured values obtained by the flow rate measurer when the flow rate is zero; a water leakage determiner that determines whether or not there is water leakage based on a second flow rate pattern indicating temporal changes in measured values obtained by the flow rate measurer and the first flow rate pattern stored in the flow rate pattern storage; a display that displays predetermined information in a case where the water leakage determiner has determined that there is water leakage; and a communicator that notifies a center that manages water leakage of an occurrence of water leakage.

As described above, the water meter according to the present disclosure uses the flow rate measurer, which measures a flow rate that is an instantaneous flow rate, and also uses the first flow rate pattern obtained when the flow rate is zero and the second flow rate pattern regarding the currently measured flow rate. This makes it possible to determine whether or not there is extremely minute water leakage. Further, the water meter can perform displaying on the display and notification to the center based on a result of the above determination. Accordingly, it can be expected that water leakage will be addressed appropriately.

### Advantageous Effects of Invention

The present disclosure makes it possible to provide a water meter capable of achieving accurate water leakage detection.

### Brief Description of Drawings

FIG. 1 is a schematic diagram showing the configuration of a water supply network to which a water meter of the present disclosure is applicable.
FIG. 2 is a schematic diagram showing the configuration of the water meter according to Embodiment 1.
FIGS. 3A to 3C illustrate water leakage determination performed by the water meter.
FIGS. 4A to 4D illustrate water leakage determination performed taking the temperature and pressure of water into account.
FIG. 5 is a schematic diagram showing the configuration of a water meter according to Embodiment 2.
FIGS. 6A to 6D illustrate water leakage determination performed taking vibration of a measurement passage into account.

### Description of Embodiments

### (Embodiment 1)

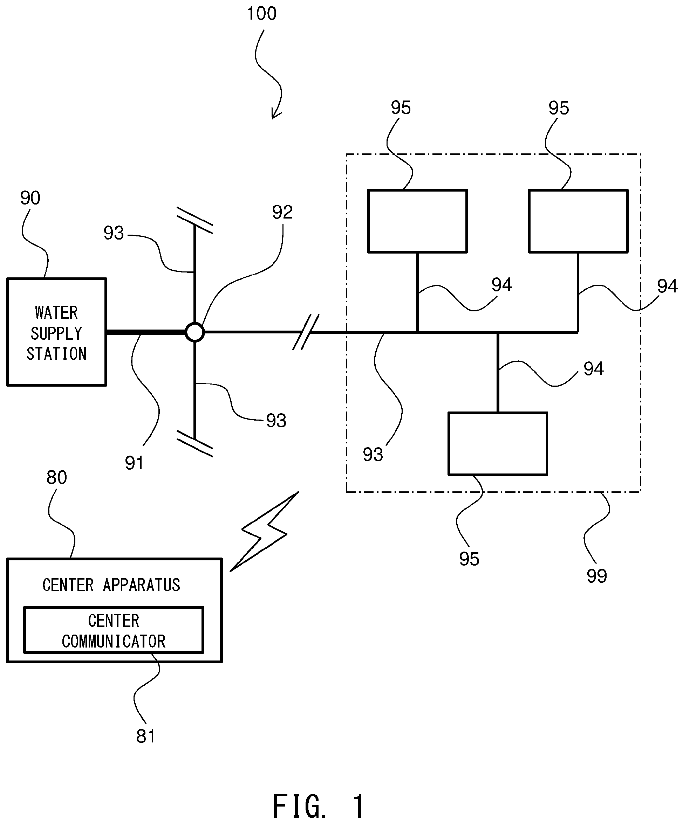

Hereinafter, a water meter according to an embodiment of the present disclosure is described with reference to the drawings. FIG. 1 is a schematic diagram showing the configuration of a water supply network to which the water meter of the present disclosure is applicable. A water supply network 100 in FIG. 1 is a network for supplying domestic water from a water supply station 90, which stores water purified at a water treatment plant and which supplies the water downstream, to a plurality of customer premises 95. For this purpose, in the water supply network 100, a large-diameter main pipe 91 extends from the water supply station 90, and a branch point 92 is connected to the downstream end of the main pipe 91. Upstream ends of a plurality of common pipes 93 are connected to the branch point 92, and the common pipes 93 distribute water to respective districts 99.

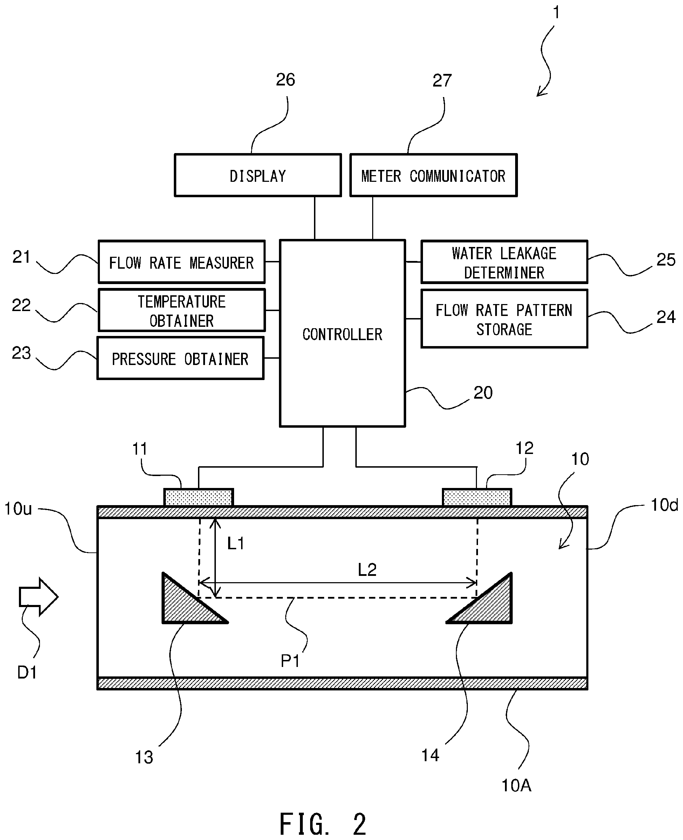

Each district 99 includes a plurality of customer premises 95. In each district 99, service pipes 94 extend from various points on the common pipe 93 laid in the district 99 to respective customer premises 95. Specifically, upstream ends of the respective service pipes 94 are connected to the common pipe 93, whereas downstream ends of the respective service pipes 94 are connected to the respective customer premises 95. In the water supply network 100 thus configured, the water from the water supply station 90 is supplied to the customer premises 95 through the main pipe 91, the branch point 92, the common pipes 93, and the service pipes 94. Each customer premises 95 is provided with a water meter 1 (see FIG. 2) so that the amount of water used at (i.e., the amount of water supplied to) the customer premises 95 can be measured (which will be described below in detail).

The water supply network 100 further includes a center apparatus 80. The center apparatus 80 includes a center communicator 81 to perform wireless communication with the water meter 1 installed at each customer premises 95. Via the center communicator 81, the center apparatus 80 gives various control instructions to each water meter 1, and receives from each water meter 1 various information regarding a flow rate, including meter-reading data. It should be noted that a communication scheme between the center apparatus 80 and each water meter 1 is not particularly limited. For example, any communication scheme may be adopted, such as cellular communication, specified low power radio communication, or network communication via a relay station.

FIG. 2 is a schematic diagram showing the configuration of the water meter 1 according to Embodiment 1. The water meter 1 includes a measurement passage 10, a first ultrasonic transducer 11, and a second ultrasonic transducer 12. The water meter 1 further includes a controller 20, a flow rate measurer 21, a temperature obtainer 22, a pressure obtainer 23, a flow rate pattern storage 24, a water leakage determiner 25, a display 26, and a meter communicator 27.

First, the measurement passage 10 included in the water meter 1 is described.

The measurement passage 10 included in the water meter 1 is a passage through which water serving as a fluid to be measured flows, and is formed as an internal space of a pipe member 10A. The pipe member 10A is interposed in each the service pipe 94, which leads to the corresponding customer premises 95. Accordingly, water supplied from the water supply station 90 and used at the customer premises 95 flows through the measurement passage 10 from an upstream opening 10u of the pipe member 10A toward a downstream opening 10d thereof in a flow direction D1 indicated by a black-outlined arrow in FIG. 2.

The measurement passage 10 is provided with a pair of ultrasonic transducers, i.e., the first ultrasonic transducer 11 and the second ultrasonic transducer 12. Each of the first ultrasonic transducer 11 and the second ultrasonic transducer 12 includes, for example: a piezoelectric vibrator in which a piezoelectric ceramic plate is sandwiched between electrodes; and terminals connected to the piezoelectric vibrator. The piezoelectric vibrator vibrates based on an electrical signal inputted through the terminals, and outputs to the outside a wave (ultrasonic wave) having a predetermined frequency and predetermined amplitude. On the other hand, when a wave (ultrasonic wave) is inputted from the outside, the piezoelectric vibrator outputs to the terminals an electrical signal corresponding to the frequency and amplitude of the wave.

In the example shown in FIG. 2, both the first ultrasonic transducer 11 and the second ultrasonic transducer 12 are provided on the outer surface of the pipe member 10A on the same side (upper side in FIG. 2) with respect to the center of the flow when the measurement passage 10 is viewed from the side. Each of the first ultrasonic transducer 11 and the second ultrasonic transducer 12 is capable of emitting an ultrasonic wave toward the measurement passage 10 in a direction crossing the flow direction D1 and receiving an ultrasonic wave in a direction crossing the flow direction D1.

The measurement passage 10 is further provided with a first reflector 13 and a second reflector 14. Each of the first reflector 13 and the second reflector 14 includes a reflecting surface whose inclination angle is adjusted, and their relative positions with respect to the first ultrasonic transducer 11 and the second ultrasonic transducer 12 are adjusted. Accordingly, for example, an ultrasonic wave emitted from the first ultrasonic transducer 11 travels so as to cross the measurement passage 10, reflects off the first reflector 13 to travel toward the second reflector 14, and further reflects off the second reflector 14 to travel so as to cross the measurement passage 10 again, and is then inputted to the second ultrasonic transducer 12.

In this manner, the ultrasonic wave emitted from the first ultrasonic transducer 11 travels along a propagation path P1 (indicated by dashed line in FIG. 2), which sequentially passes through the first ultrasonic transducer 11, the first reflector 13, the second reflector 14, and the second ultrasonic transducer 12. Further, the ultrasonic wave emitted from the second ultrasonic transducer 12 travels along the propagation path P1 in the reverse order of the above. That is, the ultrasonic wave emitted from the second ultrasonic transducer 12 travels along the propagation path P1 in the order of the second ultrasonic transducer 12, the second reflector 14, the first reflector 13, and the first ultrasonic transducer 11.

It should be noted that, in the example of FIG. 2, a portion of the propagation path P1 between the first ultrasonic transducer 11 and the first reflector 13, and a portion of the propagation path P1 between the second ultrasonic transducer 12 and the second reflector 14, are paths orthogonal to the flow direction D1, and these paths have the same length L1. Further, a portion of the propagation path P1 between the first reflector 13 and the second reflector 14 is a path that is parallel to the flow direction D1 and that has a length L2.

Here, the arrangement of the first ultrasonic transducer 11 and the second ultrasonic transducer 12 with respect to the measurement passage 10 as shown in FIG. 2, and the arrangement of the first reflector 13 and the second reflector 14 with respect to the measurement passage 10 as shown in FIG. 2, are mere examples, and the water meter of the present disclosure is not limited to this configuration. For example, the first ultrasonic transducer 11 and the second ultrasonic transducer 12 may be arranged such that the measurement passage 10 is interposed therebetween. Each of the first ultrasonic transducer 11 and the second ultrasonic transducer 12 may be fixed in an orientation orthogonal to the flow direction D1, or may be fixed in an orientation inclined at an angle of less than 90 degrees with respect to the flow direction D1. Each of the first reflector 13 and the second reflector 14 may be formed by the inner wall of the pipe member 10A.

Next, the components 20 to 27 included in the water meter 1 are described.

The controller 20 is an arithmetic processing device that can be constituted by, for example, a processor such as a CPU or an integrated circuit such as an ASIC. The controller 20 controls operations of the above-described first ultrasonic transducer 11 and the second ultrasonic transducer 12.

The flow rate measurer 21 is constituted by, for example, an ASIC, and is electrically connected to the controller 20. The flow rate measurer 21 measures a flow rate of water flowing through the measurement passage 10, the flow rate being an instantaneous flow rate. In the present disclosure, the flow rate measurer 21 adopts an ultrasonic flow rate measurement technique in which a flow rate is measured based on a propagation time of an ultrasonic wave between one of the first and second ultrasonic transducers 11 and 12 and the other of the ultrasonic transducers 11 and 12.

For example, a time for an ultrasonic wave emitted from the first ultrasonic transducer 11 to reach the second ultrasonic transducer 12 along the propagation path P1 is referred to as a time t1, and a time for an ultrasonic wave emitted from the second ultrasonic transducer 12 to reach the first ultrasonic transducer 11 along the propagation path P1 is referred to as a time t2. The flow rate measurer 21 measures the time t1 and the time t2, and calculates an instantaneous flow rate V of water flowing through the measurement passage 10 based on the measured times t1 and t2, the lengths L1 and L2, a speed of sound C, and a cross-sectional area S of the measurement passage 10.

The temperature obtainer 22 is electrically connected to the controller 20, and obtains the temperature of water flowing through the measurement passage 10. The specific configuration of the temperature obtainer 22 is not particularly limited, so long as the temperature obtainer 22 can obtain the temperature of water flowing through the measurement passage 10 regardless of whether the temperature is obtained directly or indirectly (obtaining the temperature of water flowing through the measurement passage 10 herein encompasses obtaining temperature information correlated to the temperature of water flowing through the measurement passage 10). As one example, the temperature obtainer 22 may be configured to obtain the temperature of the water based on the propagation time measured by the flow rate measurer 21. Specifically, the propagation speed of an ultrasonic wave in water varies depending on the temperature of the water. Accordingly, in a case where the propagation time at a predetermined temperature is used as a reference value, by comparing the propagation time measured by the flow rate measurer 21 with the reference value, the water temperature at the time of the measurement can be obtained.

The pressure obtainer 23 is electrically connected to the controller 20, and obtains the pressure of water flowing through the measurement passage 10. The specific configuration of the pressure obtainer 23 is also not particularly limited, so long as the pressure obtainer 23 can obtain the pressure of water flowing thorough the measurement passage 10 regardless of whether the pressure is obtained directly or indirectly (obtaining the pressure of water flowing through the measurement passage 10 herein encompasses obtaining pressure information correlated to the pressure of water flowing through the measurement passage 10). As one example, when an ultrasonic wave emitted by one of the first and second ultrasonic transducers 11 and 12 is received by the other of the ultrasonic transducers 11 and 12, the pressure obtainer 23 may be configured to obtain the pressure of the water based on the waveform of the received ultrasonic wave. Specifically, the waveform of an ultrasonic wave in water varies depending on the pressure of the water. Accordingly, in a case where the waveform at a predetermined pressure is used as a reference, by comparing the waveform of the received ultrasonic wave with the reference waveform, the water pressure at the time of the measurement can be obtained.

The flow rate pattern storage 24 is constituted by various memories, a hard disk, or the like, and is electrically connected to the controller 20. The flow rate pattern storage 24 stores a first flow rate pattern indicating temporal changes in measured values obtained by the flow rate measurer 21 when the flow rate of water in the measurement passage 10 is zero. The first flow rate pattern can be obtained by installing the water meter 1 in the service pipe 94 and performing measurement with the flow rate measurer 21 in a state where an operator has confirmed that "the flow rate is zero". It should be noted that the first flow rate pattern may be obtained and stored by a different method.

After the first flow rate pattern is stored, the flow rate pattern storage 24 can temporarily store, among the measured values of the flow rate continuously measured by the flow rate measurer 21, those corresponding to a predetermined period. The measured values stored in the flow rate pattern storage 24 constitute a second flow rate pattern indicating temporal changes in the measured values.

The water leakage determiner 25 is constituted by an ASIC or the like, and is electrically connected to the controller 20. The water leakage determiner 25 determines whether or not there is water leakage based on the above-described first flow rate pattern and second flow rate pattern. Determination performed by the water leakage determiner 25 will be specifically described below.

The display 26 is constituted by, for example, one or a plurality of small-sized LED indicators or a liquid crystal display, and is electrically connected to the controller 20. The display 26 can, for example, display various information to the outside using flashing patterns, lighting colors, etc. As one type of information that can be displayed to the outside, in a case where the water leakage determiner 25 has determined that there is water leakage, the display 26 displays predetermined information (such as a flashing pattern) indicating that there is water leakage.

The meter communicator 27 is communicable with the center apparatus 80 via the center communicator 81. Via the meter communicator 27, the water meter 1 notifies the center apparatus 80 of information indicating, for example, an occurrence of water leakage. Based on such information from each water meter 1, the center apparatus 80 manages the water leakage status of each water meter 1.

It should be noted that, in the above description, the controller 20, the flow rate measurer 21, the temperature obtainer 22, the pressure obtainer 23, and the water leakage determiner 25 are configured as separate independent circuits. However, the present disclosure is not limited to such a configuration. For example, one or more of the flow rate measurer 21, the temperature obtainer 22, the pressure obtainer 23, and the water leakage determiner 25 may be implemented in the controller 20 as software-implemented functions.

Next, water leakage determination performed by the water leakage determiner 25 of the water meter 1 is described.

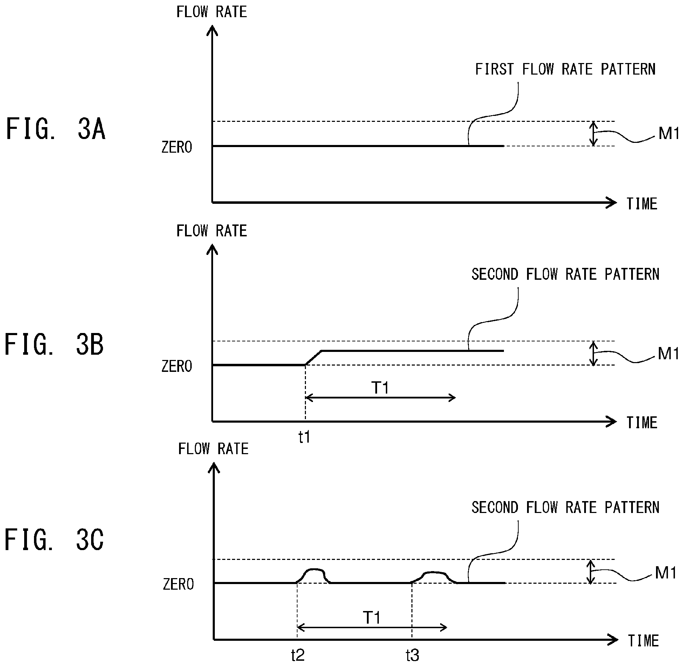

FIGS. 3A to 3C illustrate water leakage determination performed by the water meter 1 of the present disclosure. FIG. 3A is a graph showing one example of the first flow rate pattern. FIG. 3B is a graph showing one example of the second flow rate pattern in a case where there is water leakage. FIG. 3C is a graph showing another example of the second flow rate pattern in a case where there is water leakage. It should be noted that the second flow rate pattern is periodically generated (e.g., every several seconds) based on data regarding an instantaneous flow rate of water for a most recent predetermined period (e.g., for several seconds), the data being stored in the flow rate pattern storage 24.

The first flow rate pattern shows temporal changes in measured values obtained by the flow rate measurer 21 when the flow rate is zero. Accordingly, as shown in FIG. 3A, the first flow rate pattern is typically a linear pattern in which the flow rate remains zero regardless of an elapse of time. The water leakage determiner 25 determines whether or not there is water leakage on the downstream side of the water meter 1 based on the first flow rate pattern and a second flow rate pattern indicating temporal changes in measured values obtained by the flow rate measurer 21 after installation of the water meter 1.

A method adopted to perform water leakage determination based on the first flow rate pattern and the second flow rate pattern is not particularly limited, and various methods may be adopted. For example, a flow rate threshold M1 for detecting minute leakage and a predetermined duration T1 are set in advance. The duration T1 may be arbitrarily set, so long as it is shorter than or equal to an obtaining period of the instantaneous flow rate, which is used to generate the second flow rate pattern (i.e., shorter than or equal to the time length of the second flow rate pattern). Then, when the second flow rate pattern indicates a flow rate greater than zero and less than or equal to the threshold M1 and this state continues for the duration T1, it can be determined that there is leakage.

In the case of the second flow rate pattern shown in FIG. 3B, the measured value of the flow rate becomes greater than zero at a predetermined time point t1, and thereafter, during the elapse of the duration T1, a state continues in which the measured values are greater than zero and less than or equal to the threshold M1. More specifically, from the time point t1 until the duration T1 elapses, values greater than zero and less than or equal to the threshold M1 are continuously measured. Accordingly, in this case, the water leakage determiner 25 determines that there is water leakage on the downstream side of the water meter 1.

In the case of the second flow rate pattern shown in FIG. 3C, the measured value of the flow rate becomes greater than zero for a short time from a predetermined time point t2, and thereafter, from a predetermined time point t3, the measured value of the flow rate again becomes greater than zero for a short time. From the time point t2 until the duration T1 elapses, a state continues in which the measured values are greater than zero and less than or equal to the threshold M1. More specifically, from the time point t2 until the duration T1 elapses, a state continues in which a value greater than zero and less than or equal to the threshold M1 is measured intermittently. Accordingly, also in this case, the water leakage determiner 25 determines that there is water leakage on the downstream side of the water meter 1.

Although not illustrated, in a case where the second flow rate pattern coincides with the first flow rate pattern, or in a case where a flow rate greater than the threshold M1 is measured during the duration T1, it is determined that there is no water leakage. The former case corresponds to a case where no water is being used at the corresponding customer premises 95 and there is no water leakage. The latter case corresponds to a case where water is being used at the corresponding customer premises 95.

The water meter 1 of the present disclosure can perform more accurate water leakage determination based on the temperature and pressure of water in addition to the first flow rate pattern and the second flow rate pattern.

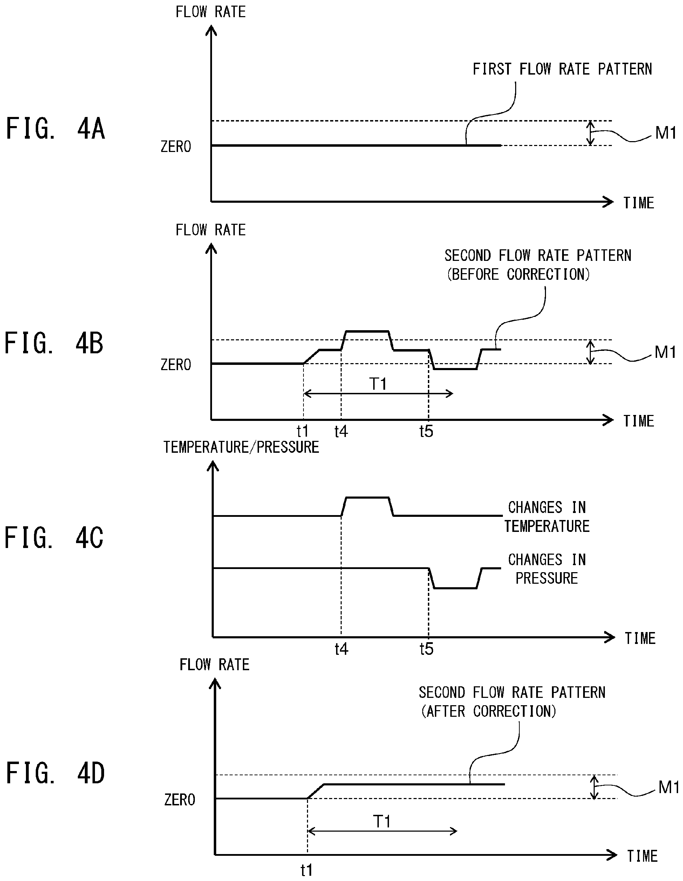

FIGS. 4A to 4D illustrate water leakage determination performed taking the temperature and pressure of water into account. FIG. 4A is a graph showing one example of the first flow rate pattern. FIG. 4B is a graph showing one example of the second flow rate pattern (before correction) in a case where there is water leakage. FIG. 4C is a graph showing one example of changes in the temperature and pressure during a period of generation of the second flow rate pattern of FIG. 4B. FIG. 4D is a graph showing one example of the second flow rate pattern after correction based on the temperature and pressure. It should be noted that the first flow rate pattern in FIG. 4A is the same as that shown in FIG. 3A.

In the case of the second flow rate pattern shown in FIG. 4B, the measured value of the flow rate becomes greater than zero at the predetermined time point t1, and then at a time point t4, the measured value further increases to be greater than the threshold M1. Thereafter, the measured value decreases to be less than or equal to the threshold M1 again, and then at a time point t5, the measured value further decreases to be less than zero. In the case of performing water leakage determination that directly uses such a second flow rate pattern as shown in FIG. 4B, a flow rate greater than the threshold M1 is measured during the duration T1 starting from the time point t1. Accordingly, in the section of duration T1, it is determined that there is no water leakage.

However, as described above, the measured value of the flow rate obtained by the flow rate measurer 21 may change due to the temperature and pressure of water in the measurement passage 10. Here, for example, assume that temporal changes in the temperature and pressure of water in the measurement passage 10, which are obtained by the temperature obtainer 22 and the pressure obtainer 23, are as shown in FIG. 4C. Specifically, the temperature temporarily increases at the time point t4 after the time point t1, and thereafter returns to the same temperature as before the time point t4. The pressure, after passing the time points t1 and t4, temporarily decreases at the time point t5, and thereafter returns to the same pressure as before the time point t5.

The water leakage determiner 25 of the present disclosure corrects the second flow rate pattern shown in FIG. 4B based on such changes in the temperature and pressure. As one example, FIG. 4D shows the second flow rate pattern after correction. As shown in FIG. 4D, in the second flow rate pattern that has been corrected based on the temperature and pressure, similar to the second flow rate pattern shown in FIG. 3B, the measured value of the flow rate becomes greater than zero at the predetermined time point t1, and thereafter, during the elapse of the duration T1, a state continues in which the measured value is greater than zero and less than or equal to the threshold M1. Accordingly, in this case, the water leakage determiner 25 determines that there is water leakage on the downstream side of the water meter 1.

As described above, the water leakage determiner 25 can perform water leakage determination more accurately by taking the temperature and pressure of water in the measurement passage 10 into account. The above description has described a case where the second flow rate pattern is corrected based on the temperature and pressure of the water. However, alternatively, the first flow rate pattern may be corrected based on the temperature and pressure of the water. In this alternative case, the first flow rate pattern after correction and the second flow rate pattern that is uncorrected may be compared, and it is preferable that the threshold M1 also be corrected based on the temperature and pressure of the water. Further, instead of performing the correction based on both the temperature and pressure of the water, the correction may be performed based on either the temperature or pressure of the water.

### (Embodiment 2)

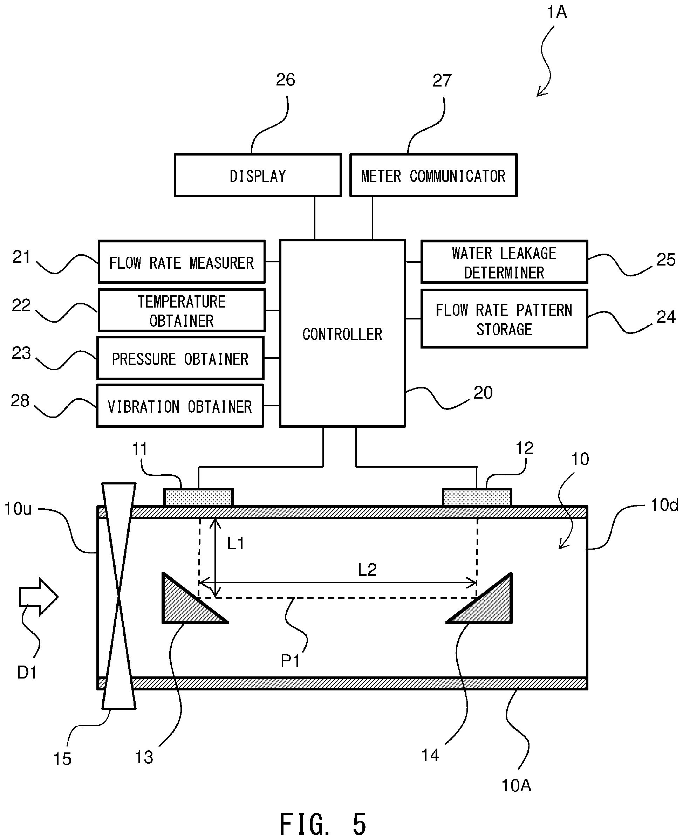

FIG. 5 is a schematic diagram showing the configuration of a water meter 1A according to Embodiment 2. The water meter 1A shown in FIG. 5 has mostly the same configuration as the water meter 1 shown in FIG. 2. However, the water meter 1A of FIG. 5 is different from the water meter 1 of FIG. 2 in that the water meter 1A of FIG. 5 includes a shutoff valve 15 and a vibration obtainer 28. Hereinafter, regarding the water meter 1A of FIG. 5, the description of the same components as those of the water meter 1 of FIG. 2 is omitted, and differences in configuration from the water meter 1 of FIG. 2 are described.

The water meter 1A includes the shutoff valve 15, which blocks and allows a flow of water in the measurement passage 10. In the measurement passage 10, the shutoff valve 15 is disposed upstream of each of the first ultrasonic transducer 11, the second ultrasonic transducer 12, the first reflector 13, and the second reflector 14. The shutoff valve 15 is opened and closed by a control signal from the controller 20. When the shutoff valve 15 is in an opened state, the measurement passage 10 serves as a passage having an opening area S (S > 0), and allows water to flow therethrough. On the other hand, when the shutoff valve 15 is in a closed state, the opening area of the measurement passage 10 is substantially zero, and does not allow water to flow therethrough.

The water meter 1A further includes the vibration obtainer 28. The vibration obtainer 28 can be configured using a known vibration sensor, and is electrically connected to the controller 20. The vibration obtainer 28 obtains (detects) vibration of the measurement passage 10, and transmits to the controller 20 vibration information such as the magnitude of the vibration.

The water meter 1A of the present disclosure can perform water leakage determination based on the vibration information about the measurement passage 10 in addition to the first flow rate pattern and the second flow rate pattern.

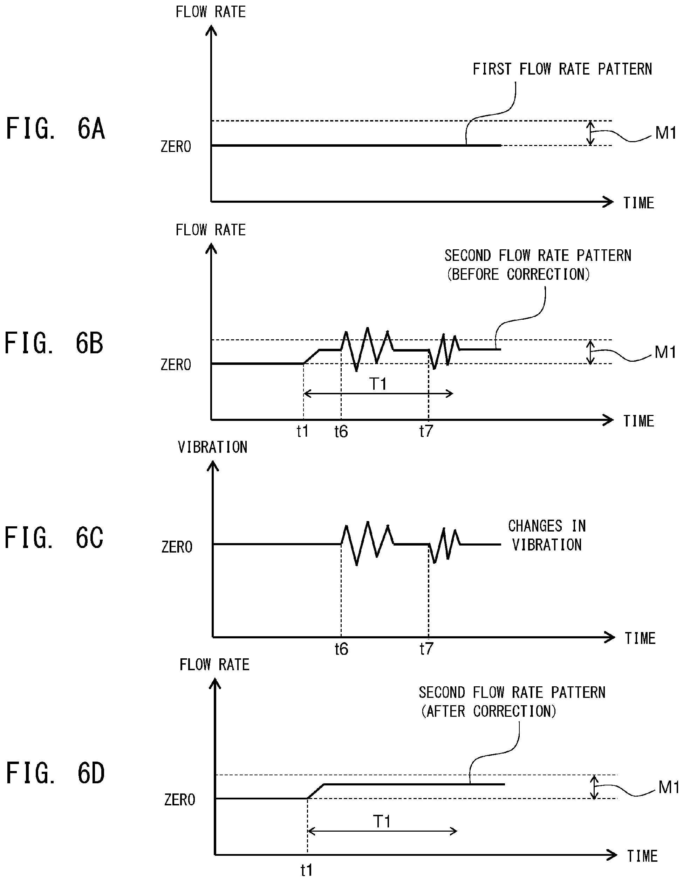

FIGS. 6A to 6D illustrate water leakage determination performed taking vibration of the measurement passage 10 into account. FIG. 6A is a graph showing one example of the first flow rate pattern. FIG. 6B is a graph showing one example of the second flow rate pattern (before correction) in a case where there is water leakage. FIG. 6C is a graph showing one example of changes in the vibration during a period of generation of the second flow rate pattern of FIG. 6B. FIG. 6D is a graph showing one example of the second flow rate pattern after correction based on the vibration. It should be noted that the first flow rate pattern in FIG. 6A is the same as that shown in FIG. 3A.

In the case of the second flow rate pattern shown in FIG. 6B, the measured value of the flow rate becomes greater than zero at the predetermined time point t1, and then during a short period from a time point t6, a state in which the measured value increases to exceed the threshold M1 occurs several times intermittently. Thereafter, the measured value decreases to be less than or equal to the threshold M1 again. From a time point t7, again, a state in which the measured value increases to exceed the threshold M1 occurs several times intermittently. In the case of performing water leakage determination that directly uses such a second flow rate pattern as shown in FIG. 6B, a flow rate greater than the threshold M1 is measured during the duration T1 starting from the time point t1. Accordingly, in the section of duration T1, it is determined that there is no water leakage.

However, when vibration occurs in the measurement passage 10, the measured value of the flow rate obtained by the flow rate measurer 21 may change in accordance with the vibration. Here, for example, assume that temporal changes in the vibration of the measurement passage 10 obtained by the vibration obtainer 28 are as shown in FIG. 6C. Specifically, vibration having a predetermined amplitude occurs for a short time from the time point t6 and for a short time from the time point t7.

The water leakage determiner 25 of the water meter 1A of the present disclosure corrects the second flow rate pattern shown in FIG. 6B based on such changes in the vibration. As one example, FIG. 6D shows the second flow rate pattern after correction. As shown in FIG. 6D, in the second flow rate pattern that has been corrected based on the vibration, similar to the second flow rate pattern shown in FIG. 3B, the measured value of the flow rate becomes greater than zero at the predetermined time point t1, and thereafter, during the elapse of the duration T1, a state continues in which the measured value is greater than zero and less than or equal to the threshold M1. Accordingly, in this case, the water leakage determiner 25 determines that there is water leakage on the downstream side of the water meter 1.

As described above, the water leakage determiner 25 can perform water leakage determination more accurately by taking the vibration of the measurement passage 10 into account. The above description has described a case where the second flow rate pattern is corrected based on the vibration. However, alternatively, the first flow rate pattern may be corrected based on the vibration. In this case, the first flow rate pattern after correction and the second flow rate pattern that is uncorrected may be compared, and it is preferable that the threshold M1 also be corrected based on the vibration.

The water meter 1A according to Embodiment 2 further includes the temperature obtainer 22 and the pressure obtainer 23. Therefore, the water leakage determiner 25 of the water meter 1A can perform water leakage determination by taking any one or more of the temperature, pressure, and vibration into account.

Further, as described above, the water meter 1A includes the shutoff valve 15. Therefore, in a case where the water leakage determiner 25 has determined that there is water leakage, the measurement passage 10 can be promptly closed by driving the shutoff valve 15 in accordance with an instruction from the controller 20. Accordingly, after it is determined that there is water leakage, further water leakage on the downstream side of the water meter 1A can be suppressed.

As described above, in the measurement passage 10, the shutoff valve 15 is positioned upstream of each of the first ultrasonic transducer 11, the second ultrasonic transducer 12, the first reflector 13, and the second reflector 14. Accordingly, even after the shutoff valve 15 is closed, a flow of water in the measurement passage 10 can be measured by the flow rate measurer 21 for a certain period of time. As a result, water leakage determination can be performed more accurately in a state where the influence from the upstream side of the water meter 1A is eliminated.

For example, during normal operation, water leakage determination may be performed with the shutoff valve 15 being open, and if it is determined that there is water leakage, water leakage determination may be performed again with the shutoff valve 15 being closed, and if it is still determined that there is water leakage even with the shutoff valve 15 being closed, the determination that there is water leakage may be finalized. On the other hand, in the case where water leakage determination is performed again with the shutoff valve 15 being closed and it is, as a result, determined that there is no water leakage, the determination that there is no water leakage may be finalized.

Further, in Embodiments 1 and 2 described above, water leakage determination is performed by comparing the first flow rate pattern and the second flow rate pattern over their respective sections of duration T1, with both sections having the same start time point and the same end time point. The time length of each section (i.e., the duration T1) may be fixed, or may be made different depending on the case. Similarly, the threshold M1 may be a fixed value, or may be made different depending on the case.

### (Other Embodiments)

Based on the above descriptions of the embodiments, the present specification discloses the techniques indicated below.

### (Technique 1)

A water meter including: a measurement passage through which water serving as a fluid to be measured flows; a flow rate measurer that measures a flow rate of the water flowing through the measurement passage, the flow rate being an instantaneous flow rate; a flow rate pattern storage that stores a first flow rate pattern indicating temporal changes in measured values obtained by the flow rate measurer when the flow rate is zero; a water leakage determiner that determines whether or not there is water leakage based on a second flow rate pattern indicating temporal changes in measured values obtained by the flow rate measurer and the first flow rate pattern stored in the flow rate pattern storage; a display that displays predetermined information in a case where the water leakage determiner has determined that there is water leakage; and a communicator that notifies a center that manages water leakage of an occurrence of water leakage.

As described above, the water meter according to technique 1 uses the flow rate measurer, which measures a flow rate that is an instantaneous flow rate, and also uses the first flow rate pattern obtained when the flow rate is zero and the second flow rate pattern regarding the currently measured flow rate. This makes it possible to determine whether or not there is extremely minute water leakage. Further, the water meter can perform displaying on the display and notification to the center based on a result of the above determination. Accordingly, it can be expected that water leakage will be addressed appropriately.

### (Technique 2)

The water meter according to technique 1, further comprising a pair of ultrasonic transducers arranged on the measurement passage, wherein a measurement technique adopted by the flow rate measurer is an ultrasonic flow rate measurement technique in which the flow rate is measured based on a propagation time of an ultrasonic wave between one of the ultrasonic transducers and the other of the ultrasonic transducers.

By adopting the above configuration in which the flow rate of water is measured using an ultrasonic flow rate measurement technique, the instantaneous flow rate of the water can be detected with high accuracy even when the instantaneous flow rate is a micro-flow rate. Accordingly, accurate water leakage determination can be achieved.

### (Technique 3)

The water meter according to technique 1 or 2, further comprising: a water temperature obtainer that obtains a temperature of the water flowing through the measurement passage; and a water pressure obtainer that obtains a pressure of the water flowing through the measurement passage, wherein the water leakage determiner determines whether or not there is water leakage based on the first flow rate pattern, the second flow rate pattern, the temperature of the water obtained by the water temperature obtainer, and the pressure of the water obtained by the water pressure obtainer.

A measured value of the flow rate of water may include an error relative to an actual flow rate value due to the temperature or pressure of the water. Accordingly, by obtaining the temperature and pressure of the water and performing water leakage determination based the obtained temperature and pressure, a more accurate determination result can be obtained.

### (Technique 4)

The water meter according to any one of techniques 1 to 3, further including: a vibration obtainer that obtains vibration of the measurement passage, wherein the water leakage determiner determines whether or not there is water leakage based on the first flow rate pattern, the second flow rate pattern, and the vibration obtained by the vibration obtainer.

A measured value of the flow rate of water may include an error relative to an actual flow rate value due to vibration applied to the water meter. Accordingly, by obtaining the vibration of the measurement passage and performing water leakage determination based on the obtained vibration, a more accurate determination result can be obtained.

### (Technique 5)

The water meter according to any one of techniques 1 to 4, further including a shutoff valve that blocks or allows a flow of the water in the measurement passage, wherein in a case where the water leakage determiner has determined that there is water leakage, the shutoff valve blocks the flow of the water in the measurement passage.

Accordingly, in a case where there is a possibility of water leakage (i.e., a case where the water leakage determiner has determined that there is water leakage), the influence of the water leakage on the surrounding environment can be suppressed by closing the measurement passage.

### Industrial Applicability

The present disclosure is applicable to water meters.

### Reference Signs List

- 1: water meter
- 1A: water meter
- 10: measurement passage
- 11: first ultrasonic transducer
- 12: second ultrasonic transducer
- 15: shutoff valve
- 20: controller
- 21: flow rate measurer
- 22: temperature obtainer
- 23: pressure obtainer
- 24: flow rate pattern storage
- 25: water leakage determiner
- 26: display
- 27: meter communicator
- 28: vibration obtainer
- 80: center apparatus
- 81: center communicator
- 100: water supply network

## Claims

1. A water meter comprising:
a measurement passage through which water serving as a fluid to be measured flows;
a flow rate measurer that measures a flow rate of the water flowing through the measurement passage, the flow rate being an instantaneous flow rate;
a flow rate pattern storage that stores a first flow rate pattern indicating temporal changes in measured values obtained by the flow rate measurer when the flow rate is zero;
a water leakage determiner that determines whether or not there is water leakage based on a second flow rate pattern indicating temporal changes in measured values obtained by the flow rate measurer and the first flow rate pattern stored in the flow rate pattern storage;
a display that displays predetermined information in a case where the water leakage determiner has determined that there is water leakage; and
a communicator that notifies a center that manages water leakage of an occurrence of water leakage.

2. The water meter according to claim 1, further comprising a pair of ultrasonic transducers arranged on the measurement passage, wherein
a measurement technique adopted by the flow rate measurer is an ultrasonic flow rate measurement technique in which the flow rate is measured based on a propagation time of an ultrasonic wave between one of the ultrasonic transducers and the other of the ultrasonic transducers.

3. The water meter according to claim 1, further comprising:
a water temperature obtainer that obtains a temperature of the water flowing through the measurement passage; and
a water pressure obtainer that obtains a pressure of the water flowing through the measurement passage, wherein
the water leakage determiner determines whether or not there is water leakage based on the first flow rate pattern, the second flow rate pattern, the temperature of the water obtained by the water temperature obtainer, and the pressure of the water obtained by the water pressure obtainer.

4. The water meter according to claim 1, further comprising:
a vibration obtainer that obtains vibration of the measurement passage, wherein
the water leakage determiner determines whether or not there is water leakage based on the first flow rate pattern, the second flow rate pattern, and the vibration obtained by the vibration obtainer.

5. The water meter according to claim 1, further comprising a shutoff valve that blocks or allows a flow of the water in the measurement passage, wherein
in a case where the water leakage determiner has determined that there is water leakage, the shutoff valve blocks the flow of the water in the measurement passage.
